Europäisches Patentamt

European Patent Office

Office européen des brevets

(11) Publication number : **0 492 976 A2**

# EUROPEAN PATENT APPLICATION

(21) Application number : **91311785.9**

(22) Date of filing : **19.12.91**

(51) Int. Cl.⁵ : **C08L 67/02,** C08L 23/02, C08K 5/15

(30) Priority : **26.12.90 JP 406692/90**

(43) Date of publication of application :
**01.07.92 Bulletin 92/27**

(84) Designated Contracting States :
**AT BE CH DE DK ES FR GB GR IT LI LU MC NL SE**

(71) Applicant : **POLYPLASTICS CO. LTD.**
**3-13, Azuchicho, 2-chome**
**Chuo-Ku Osaka-shi Osaka 541 (JP)**

(72) Inventor : **Serizawa, Hajime**
**21-4, Sankeidai**
**Mishima-shi, Shizuoka (JP)**
Inventor : **Kubota, Masaru**
**976-5, Hoshiyama**
**Fujinomiya-shi, Shizuoka (JP)**
Inventor : **Sano, Hiroyuki**
**885-11, Miyajima**
**Fuji-shi, Shizuoka (JP)**
Inventor : **Tajima, Yoshihisa**
**687-1, Umegaya**
**Shimizu-shi, Shizuoka (JP)**

(74) Representative : **Jackson, Peter et al**
**HYDE, HEIDE & O'DONNELL 10-12 Priests Bridge**
**London SW15 5JE (GB)**

(54) **Polyester resin composition and process for producing the same.**

(57) A polyester resin composition providing a light-weight molding material with excellent surface conditions and mechanical properties comprises (in parts based on 100 parts by weight of the resin) :
(A) 97 to 20 parts by weight of a polyester resin,
(B) 3 to 80 parts by weight of a polyolefin resin,
(C) 0.1 to 15 parts by weight of a compound having a carbon-to-carbon double bond and an epoxy group in its molecule,
(D) 0.1 to 20 % by weight [based on the component (C)] of a radical initiator and, if necessary,
(E) a filler, such as glass fiber.
The composition displays improved compatibility of a polyester resin with a polyolefin resin.

EP 0 492 976 A2

The present invention relates to a polyester resin composition containing a polyolefin resin and a process for producing it. The present invention provides a light-weight molding material having excellent surface conditions and mechanical properties.

Thermoplastic polyesters typified by polyethylene terephthalate and polybutylene terephthalate are widely used in components of automobiles, electrical and electronic machinery, precision machinery and tools, since they can be easily processed and have excellent mechanical, physical and chemical properties.

A demand has recently arisen for reduction in the weight of automobile components in order to assist in reduce the automobile's fuel consumption. Also in the field of electrical and electronic equipment and tools, weight reduction is demanded in order to facilitate the handling thereof, for example making the equipment more portable. As one of the means for reducing the weight, it has been attempted to use a raw material having a low specific gravity for the components. It is also required that in reducing the specific gravity of thermoplastic polyesters their excellent properties are not impaired. One possible process for reducing the weight of thermoplastic polyesters comprises incorporating with them a polyolefin resin having a specific gravity lower than that of the polyester. However, since the compatibility of the polyester with the polyolefin resin is poor if they are simply melt-kneaded together, peeling is often observed on the surface of a molding formed therefrom, apparently due to insufficient dispersion of the polyolefin, resulting in impaired impact strength. Thus no practically usable resin composition could be obtained. Processes for improving the compatibility of the polyester with the polyolefin resin are disclosed in Japanese Laid-Open Patent Specifications Nos. 60744/1986 and 60746/1986. In the former, a copolymer of an epoxidized ethylene or ethylenically unsaturated compound is used and in the latter, a modified polypropylene is used in addition to the copolymer to improve the compatibility. However, the compatibility is not always sufficiently improved by these processes and a further improvement is demanded. An object of the present invention is to provide a light-weight molding material having excellent surface conditions and properties such as mechanical properties by solving the above-described problems of the resin composition comprising the polyester resin and polyolefin resin.

After intensive investigations made for the purpose of solving these problems, the inventors have found that a polyester resin composition capable of forming moldings having excellent surface conditions without seriously impairing the excellent properties of the polyester can be provided when the compatibility of the polyester with the polyolefin resin is improved by using, in the step of melt-kneading the polyester resin with the polyolefin resin, (i) a compound having a carbon-to-carbon double bond and an epoxy group in the molecule and (ii) a radical initiator. The present invention has been completed on the basis of this finding.

Thus the present invention provides a polyester resin composition produced by blending 100 parts by weight of a resin component comprising:

(A) 97 to 20 parts by weight of a polyester resin and

(B) 3 to 80 parts by weight of a polyolefin resin with

(C) 0.1 to 15 parts by weight of a compound having a carbon-carbon double bond and an epoxy group in its molecule,

(D) 0.1 to 20% by weight, based on the component (C), of a radical initiator and

(E) 0 to 120 parts by weight of one or a mixture of fillers selected from among fibrous, powdery, flaky and hollow fillers.

The invention further provides a process for producing the above-defined polyester resin composition, characterized by kneading a mixture comprising the components (A), (B), (C) and (D) while heat melting for at least 30 sec.

The polyester resin (A) to be used in the present invention may be either a homopolyester or a copolyester obtained by the polycondensation of (1) one or more of dicarboxylic acids such as terephthalic, isophthalic, naphthalenedicarboxylic, 4,4'-diphenyldicarboxylic and diphenyl ether dicarboxylic acids, $\alpha$, $\beta$-bis(4-carboxyphenoxy)ethane, adipic, sebacic, azelaic, decanedicarboxylic, dodecanedicarboxylic, cyclohexanedicarboxylic and dimer acids and ester-forming derivatives of them with (2) one or more glycols selected from among ethylene glycol, propylene glycol, butanediol, pentanediol, neopentyl glycol, hexanediol, octanediol, decanediol, cyclohexanedimethanol, hydroquinone, bisphenol A, 2,2-bis(4'-hydroxyepoxyphenyl)propane, xylene glycol, polyethylene ether glycol, polytetramethylene ether glycol and aliphatic polyester oligomers having hydroxyl groups at both ends thereof. They may be either homopolyesters or copolyesters.

The comonomer components constituting the copolyesters include, in addition to those described above, hydroxy carboxylic acids such as glycolic, hydroxy, hydroxybenzoic, hydroxyphenylacetic and naphthylglycolic acids; and lactone compounds such as propiolactone, butyrolactone, caprolactone, valerolactone and caprolactone. The polyester may have a branched or crosslinked structure formed by using a polyfunctional ester-forming component such as trimethylolpropane, trimethylolethane, pentaerythritol, trimellitic acid, trimesic acid or pyromellitic acid so far as the thermoplastic properties thereof can be retained.

They further include halogenated polyester copolymers produced from a compound having an aromatic nucleus substituted with a halogen compound and having an ester-forming group, such as dibromoterephthalic acid, tetrabromoterephthalic acid, tetrachloroterephthalic acid, 1,4-dimethyloltetrabromobenzene, tetrabromebisphenol A and ethylene and propylene oxide adducts of tetrabromo- bisphenol A.

Polyester elastomers comprising a block copolymer of a high-melting hard segment and a low-melting soft segment are also usable. The polyester elastomers include, for example, a block copolymer of a hard segment mainly comprising alkylene terephthalate units and a soft segment comprising an aliphatic polyester or polyether.

The polyester resins can be used either singly or in the form of a mixture of two or more of them as the component (A). Particularly preferred polyester resins are polyethylene terephthalate, polybutylene terephthalate and copolymers comprising them as the main recurring units. Particularly preferred comonomer components constituting the copolymer include isophthalic acid, bisphenol A, 2,2bis-(β-hydroxyethoxyphenyl)propane and 2,2-bis(β-hydroxyethoxytetrabromophenyl)propane.

The polyolefin resins used as the component (B) in the present invention include polyethylene, polypropylene, polymethylpentene, polybutylene, copolymers comprising them as the main components, such as ethylene/propylene copolymer, ethylene/ propylene/ diene copolymer and copolymers comprising monomers other than olefins. These polyolefin resins can be used either singly or in the form of a mixture of two or more of them. Particularly when a polyolefin elastomer such as ethylene/propylene copolymer or ethylene/propylene/ diene copolymer is used, a remarkable effect in improving the tenacity of the resin composition is obtained. The amount of the polyolefin resin (B), which varies depending on the intended properties and use, is 3 to 80 parts by weight for 97 to 20 parts by weight of the polyester resin (A). Although a large amount of the polyolefin resin is preferably incorporated when a resin composition having a low specific gravity is to be produced, the heat distortion temperature is unfavorably lowered when the amount of the polyolefin resin exceeds 80 parts by weight. When an improvement in the tenacity of the resin composition is intended, it is required to incorporate at least 3 parts by weight, preferably at least 5 parts by weight, of the polyolefin resin, though the amount varies depending on the kind of the component (B).

The present invention is characterized in that a compound having a carbon-to-carbon double bond and epoxy group in its molecule, such as an epoxidized vinyl or allyl compound is used as the component (C). Compounds to be used as the component (C) are preferably those which are not easily volatilized in the melt-kneading step (such as one having a boiling point of 150°C or above) such as allyl glycidyl ether, glycidyl acrylate, glycidyl methacrylate, glycidyl vinylbenzoate, glydicyl allylbenzoate, N-[4-(2,3-epoxypropoxy)-3,5-dimethylbenzyl]acrylamide, N-diallylaminoepoxypropane, epoxyhexene, esters of epoxidized stearyl alcohol with acrylic or methacrylic acid, glycidyl cinnamate, glycidyl cinnamylideneacetate and chalcone glycidyl ether. Among them, particularly preferred are glycidyl methacrylate, glycidyl vinylacetate, glycidyl allylbenzoate, N-[4-(2,3-epoxypropoxy)-3,5-dimethylbenzyl]- acrylamide and N-diallylaminoepoxypropane.

The amount of the component (C) used is 0.1 to 15 parts by weight, preferably 1 to 10 parts by weight, for 100 parts by weight of the total of the polyester resin [component (A)] and polyolefin resin (component (B)]. The amount varies depending on the particular kind of component (C) and the use of the composition to be produced. If the amount is insufficient, the effect in improving the compatibility of the polyester with the polyolefin resin is unsatisfactory and peeling is inclined to occur on the surface of the molding and, on the contrary, if it is excessive, the melt viscosity is excessively increased and inhibits the molding process or cause undesired bleeding out.

Another feature of the present invention is to incorporate the radical initiator component (D). Since the requirement is to form free radicals the choice of radical initiators is not particularly limited and all known radical initiators are thus usable. They are preferably those having a one-mixture half-life temperature of 130°C or above, particularly 150°C or above. Examples include dicumyl peroxide, t-butyl cumyl peroxide, 2,5-dimethylhexane- -2,5-dihydroperoxide, di-t-butyl peroxide, 2,5-dimethyl-2,5-di(t-butylperoxy)hexane, 2,5-dimethyl-2,5-di(t-butylperoxy)hexyne-3, n-butyl-4,4-bis(t-butylperoxy)valerate, 2,3-diethyl-2,3-diphenylbutane, 2,3-dimethyl-2,3-diphenylbutane 2,3-dimethyl-2,3-di(p-methylphenyl)butane and 2,3-dimethyl-2,3-di(bromophenyl)butane. They can be used either singly or in combination of two or more of them.

The amount of the component (D) used is 0.1 to 20% by weight, preferably 0.3 to 10% by weight, based on the component (C). The amount of the radical initiator to be added varies depending on the kind thereof and the use of the composition to be produced. If it is insufficient the effect in improving the compatibility of the polyester with the polyolefin resin is unsatisfactory and peeling is inclined to occur on the surface of the molding and, on the contrary, when it is excessive, the mixture causes disadvantageous bubbling in the melt kneading step.

Although the filler to be used as the component (E) in the present invention is not indispensable, it is preferably used in order to obtain moldings having excellent properties such as mechanical strength, thermal resistance, dimensional stability and electrical properties. A fibrous, powdery, flaky or hollow filler is used depending on the purpose.

Suitable fibrous fillers include inorganic fibrous substances such as glass fibers, asbestos fibers, carbon fibers, silica fibers, silica/alumina fibers, zirconia fibers, boron nitride fibers, silicon nitride fibers, boron fibers, potassium titanate fibers and metal fibers such as stainless steel, aluminium, titanium, copper and brass fibers. Typical examples of the fibrous fillers are glass fibers and carbon fibers. High-boiling organic fibrous substances such as polyamides, fluororesins and acrylic resins are also usable.

Suitable powdery fillers include carbon black, silica, silicates such as quartz powder, glass beads, glass powder, calcium silicate, aluminium silicate, kaolin, talc, clay, diatomaceous earth and wollastonite; metal oxides such as iron oxide, titanium oxide and alumina; metal carbonates such as calcium carbonate and magnesium carbonate; metal sulphates such as calcium sulphate and barium sulphate; as well as silicon carbide, silicon nitride, boron nitride and various metal powders.

Suitable flaky fillers include mica, glass flakes and metal foils.

Suitable hollow fillers include Shirasu balloons, metal balloons and glass balloons.

These fillers are preferably surface-treated with an organic silane, organic borane or organic titanate.

The fillers can be used either singly or in combination of two or more of them. The combination of the fibrous filler, particularly glass fiber or carbon fiber, with the granular or flaky filler is preferred for obtaining excellent mechanical strength, dimensional accuracy and electrical properties.

The amount of the filler (E) must not be more than 120 parts by weight for 100 parts by weight of the total of the resin components (A) and (B). If it is used in a larger amount, the moldability and tenacity are unfavorably impaired. The amount is most preferably not larger than 70 parts by weight.

The composition of the present invention may further contain other thermoplastic resins such as a polyvinyl chloride resin, polyvinylidene chloride resin, polycarbonate resin, polyamide resin, natural rubber or synthetic rubber, as well as a flame retardant, antioxidant, ultraviolet screening agent, lubricant, releasing agent, nucleating agent, foaming agent, crosslinking agent and colorant, so far as the object of the present invention can be attained.

The composition of the present invention can be produced by various known processes. It is indispensable that at least four components (A), (B), (C) and (D) are heated to melting and kneaded for at least 30 sec. Component (E) and other components may be treated together with them or added separately. In particular, the components (A), (B), (C), and (D), and if necessary the component (E), are homogeneously mixed together in a mixer such as a tumbler or Henschel mixer and the mixture is fed into a single-screw or double-screw extruder and melt-kneaded therein to form pellets. It is preferred to prepare a solution of the components (C) and (D) previously and add it to the powdery components (A) and (B), drying the mixture for feeding. It is particularly preferred to feed the component (D) to be added in a small amount in such a solution state. The component (E) may be added in the course of or after the completion of the melt-kneading treatment.

The kneading temperature is higher than the melting point of the resin component by 5 to 100°C, particularly by 10 to 60°C. If the temperature is excessively high, undesired decomposition of the resin and an abnormal reaction are caused. The kneading time ranges from 30 sec to 15 min, preferably 1 to 10 min.

Although the mechanism of the present invention in inhibiting peeling of the surface of the molding has not yet been fully elucidated, it is conceivable that the polyolefin resin (B) is bonded to the polyester resin (A) by the component (C) and radical initiator (D) to improve the compatibility of the polyolefin resin with the polyester resin, thereby improving the dispersion and inhibiting the peeling of the molding surface by the phase separation.

It will be apparent from the above description and the following Examples that the polyester resin composition of the present invention has improved mechanical properties and capable of forming a lightweight molding having a good appearance and being free from surface peeling.

Examples

The following non-limiting Examples further illustrate the present invention.

Examples 1 to 6 and Comparative Examples 1 to 4

35 parts by weight of polybutylene terephthalate resin (PBT) (Duranex 2000 manufactured by Polyplastics Co., Ltd.) was mixed with 65 parts by weight of polymethylpentene (PMP) (TPX RT18XB manufactured by Mitsui Petrochemical Industries, Ltd.). Then N-(4-(2,3-epoxypropoxy)-3,5-dimethylbenzyl)- acrylamide (C-1) and a previously prepared 10% solution of 2,5-dimethyl-2,5-di(t-butylperoxy)hexane (D-1) in acetone were added thereto in amounts specified in Table 1. After mixing them, acetone was removed and, if necessary, glass fibers (chopped strands having a diameter of 10 μm and a length of 3 mm) were added thereto and premixed with a

4

Henschel mixer for 5 min. The mixture was melt-kneaded with an extruder having a cylinder temperature of 260°C (residence time about 2 min) and shaped into pellets of the polyester resin composition.

ASTM test pieces were then prepared by molding with an injection molding machine at a cylinder temperature of 260°C and a mold temperature of 60°C and were subjected to tensile and impact tests. The surface conditions of the tensile test pieces were observed with the naked eye to determine the extent of surface peeling. The results are summarized in Table 1.

Examples 7 to 10 and Comparative Examples 5 to 8

The above-described PBT resin, PMP, C-1 and D-1 were blended in the amounts specified in Table 2 and the same procedure as that of the Examples 1 to 6 was repeated. The results are summarized in Table 2.

Examples 11 to 15

The same procedure as that of the Example 2 was repeated except that C-1 was replaced with glycidyl methacrylate (C-2) or N-diallylaginoepoxypropane (C-3) and that D-1 was replaced with 2,5-dimethyl-2,5-di(t-butylperoxy)hexyne-3 (D-2), 2,3-dimethyl-2,3-diphenylbutane (D-3) or 2,5-dimethylhexane 2,5-dihydroperoxide (D-4). The results are summarized in Table 3.

Examples 16 to 20 and Comparative Examples 9 to 13

The same procedure as that of the Example 8 was repeated except that the PMP was replaced with polyethylene (PE) (Hi-zex 2100J manufactured by Mitsui Petrochemical Industries, Ltd.), polypropylene (PP) (Noprene X101A manufactured by Sumitomo Chemical Co., Ltd.), ethylene/propylene copolymer (EPR).(EP912P manufactured by Japan Synthetic Rubber Co., Ltd.), EPDM resin (EP161SP manufactured by Japan Synthetic Rubber Co., Ltd.) or polybutene-1 (Polybutene M0400 manufactured by Mitsui Petrochemical Industries, Ltd.) each in an amount specified in Table 4. The results are summarized in Table 4.

[Table 1]

| | | Comp. Ex. 1 | Comp. Ex. 2 | Ex. 1 | Ex. 2 | Ex. 3 | Ex. 4 | Ex. 5 | Comp. Ex. 3 | Comp. Ex. 4 | Ex. 6 |
|---|---|---|---|---|---|---|---|---|---|---|---|
| Amount (pt. by wt.) | Compt. (A) PBT | 35 | 35 | 35 | 35 | 35 | 35 | 35 | 35 | 35 | 35 |
| | Compt. (B) PMP | 65 | 65 | 65 | 65 | 65 | 65 | 65 | 65 | 65 | 65 |
| | Compt. (C) C-1 | – | 2 | 0.5 | 2 | 10 | 2 | 2 | – | 2 | 2 |
| | Compt. (D) D-1 (wt.% based on compt. (C)) | – | – | 0.5 | 0.5 | 0.5 | 5 | 10 | – | – | 0.5 |
| | Compt. (E) glass fibers | – | – | – | – | – | – | – | 43 | 43 | 43 |
| Properties of compn. | tens. strength [kg/cm$^2$] | 280 | 281 | 290 | 300 | 360 | 340 | 355 | 780 | 785 | 800 |
| | tens. elongn. [%] | 12 | 12 | 13 | 13 | 15 | 14 | 15 | 2.3 | 2.3 | 2.5 |
| | Izod impact strength [kgcm/cm] notched | 1.2 | 1.2 | 1.4 | 1.6 | 1.9 | 1.7 | 1 8 | 6.5 | 6.5 | 7.0 |
| | appearance of molding (peeling) | peeling | peeling | slight peeling | no peeling | no peeling | no peeling | no peeling | peeling | peeling | no peeling |

EP 0 492 976 A2

[Table 2]

| | | Comp. Ex. 5 | Ex. 7 | Comp. Ex. 6 | Ex. 8 | Comp. Ex. 7 | Ex. 9 | Comp. Ex. 8 | Ex. 10 |
|---|---|---|---|---|---|---|---|---|---|
| Amount (pt. by wt.) | Compt. (A) PBT | 85 | 85 | 70 | 70 | 50 | 50 | 70 | 70 |
| | Compt. (B) PMP | 15 | 15 | 30 | 30 | 50 | 50 | 30 | 30 |
| | Compt. (C) C-1 | – | 2 | – | 2 | – | 2 | – | 2 |
| | Compt. (D) D-1 (wt.% based on compt. (C)) | – | 0.5 | – | 0.5 | – | 0.5 | – | 0.5 |
| | Compt. (E) glass fibers | – | – | – | – | – | – | 43 | 43 |
| Properties of compn. | tens. strength [kg/cm$^2$] | 305 | 330 | 300 | 320 | 290 | 310 | 1200 | 1250 |
| | tens. elongn. (%) | 8.0 | 9.0 | 9.0 | 9.5 | 9.5 | 11 | 2.5 | 2.6 |
| | Izod impact strength [kgcm/cm] notched | 1.1 | 1.4 | 1.3 | 1.5 | 1.4 | 1.6 | 9.0 | 9.3 |
| | appearance of molding (peeling) | peeling | no peeling | peeling | no peeling | peeling | no peeling | peeling | no peeling |

EP 0 492 976 A2

7

[Table 3]

| | | | Comp. Ex. 1 | Ex. 11 | Ex. 12 | Ex. 13 | Ex. 14 | Ex. 15 |
|---|---|---|---|---|---|---|---|---|
| Amount (pt. by wt.) | Compt. (A) PBT | | 35 | 35 | 35 | 35 | 35 | 35 |
| | Compt. (B) PMP | | 65 | 65 | 65 | 65 | 65 | 65 |
| | Compt. (C) C-1 | C-1 | – | 2 | 2 | 2 | – | – |
| | | C-2 | – | – | – | – | 2 | – |
| | | C-3 | – | – | – | – | – | 2 |
| | Compt. (D) D-1 (wt.% based on compt. (C)) | D-1 | – | – | – | – | 0.5 | 0.5 |
| | | D-2 | – | 0.5 | – | – | – | – |
| | | D-3 | – | – | 0.5 | – | – | – |
| | | D-4 | – | – | – | 0.5 | – | – |
| Properties of compn. | tens. strength [kg/cm$^2$] | | 280 | 300 | 290 | 295 | 295 | 295 |
| | tens. elongn. [%] | | 12 | 13 | 13 | 13 | 13 | 13 |
| | Izod impact strength [kgcm/cm] notched | | 1.2 | 1.5 | 1.3 | 1.4 | 1.4 | 1.4 |
| | appearance of molding (peeling) | | peeling | no peeling | no peeling | no peeling | no peeling | no peeling |

[Table 4]

| | | | Comp. Ex. 9 | Ex. 16 | Comp. Ex. 10 | Ex. 17 | Comp. Ex. 11 | Ex. 18 | Comp. Ex. 12 | Ex. 19 | Comp. Ex. 13 | Ex. 20 |
|---|---|---|---|---|---|---|---|---|---|---|---|---|
| Amount (pt. by wt.) | Compt. (A) PBT | | 70 | 70 | 70 | 70 | 70 | 70 | 70 | 70 | 70 | 70 |
| | Compt. (B) | PE | 30 | 30 | – | – | – | – | – | – | – | – |
| | | PP | – | – | 30 | 30 | – | – | – | – | – | – |
| | | EPR | – | – | – | – | 30 | 30 | – | – | – | – |
| | | EPDM | – | – | – | – | – | – | 30 | 30 | – | – |
| | | polybutene-1 | – | – | – | – | – | – | – | – | 30 | 30 |
| | Compt. (C) C-1 | | – | 2 | – | 2 | – | 2 | – | 2 | – | 2 |
| | Compt. (D) D-1 (wt.% based on compt. (C)) | | – | 0.5 | – | 0.5 | – | 0.5 | – | 0.5 | – | 0.5 |
| Properties of compn. | tens. strength [kg/cm²] | | 320 | 330 | 395 | 405 | 250 | 260 | 260 | 270 | 270 | 275 |
| | tens. elongn. (%) | | 11 | 13 | 8 | 9 | 14 | 18 | 15 | 22 | 12 | 14 |
| | Izod impact strength (kgcm/cm) notched | | 1.5 | 1.8 | 1.2 | 1.5 | 1.8 | 2.6 | 2.0 | 2.9 | 1.6 | 2.2 |
| | appearance of molding (peeling) | | peeling | no peeling | peeling | no peeling | peeling | no peeling | peeling | no peeling | peeling | no peeling |

**Claims**

1. A polyester resin composition produced by blending 100 parts by weight of a resin component comprising:
    (A) 97 to 20 parts by weight of a polyester resin and
    (B) 3 to 80 parts by weight of a polyolefin resin with
    (C) 0.1 to 15 parts by weight of a compound having a carbon-to-carbon double bond and an epoxy group in its molecule, and
    (D) 0.1 to 20% by weight, based on the weight of component (C), of a radical initiator.

2. A polyester resin composition according to claim 1, in which the polyolefin resin (B) is a polyolefin elastomer selected from ethylene/propylene copolymers and ethylene/propylene/diene copolymers.

3. A polyester resin composition according to claim 1 or claim 2, in which the amount of the polyolefin resin (B) is at least 5 parts by weight.

4. A polyester resin composition according to any preceding claim, in which the component (C) has a boiling point of 150°C or above.

5. A polyester resin composition according to claim 4, in which the component (C) is selected from glycidyl methacrylate, glycidyl vinylacetate, glycidyl allylbenzoate, N-[4-(2,3-epoxypropoxy)-3,5-dimethylbenzyl]-acrylamide and N-diallylaminoepoxypropane.

6. A polyester resin composition according to any preceding claim, in which the amount of the component (C) is 1 to 10 parts by weight.

7. A polyester resin composition according to any preceding claim, wherein the component (D) is a radical initiator having a one-minute half-life temperature of 130°C or above.

8. A polyester resin composition according to any preceding claim, in which the amount of the component (D) is 0.3 to 10 % by weight [based on the weight of component (C)].

9. A polyester resin composition according to any preceding claim, which further comprises:
    (E) not more than 120 parts by weight [based on 100 parts by weight of the total of components (A) and (B)] of a filler selected from among fibrous, powdery, flaky and hollow fillers or a mixture thereof.

10. A process for producing a polyester resin composition as claimed in any preceding claim, characterized by kneading a mixture comprising at least the components (A), (B), (C) and (D) under heat melting for at least 30 sec.